# EUROPÄISCHE PATENTSCHRIFT

(11) **EP 2 724 780 B1**
(45) Veröffentlichungstag und Bekanntmachung des Hinweises auf die Patenterteilung: **22.07.2015**
(21) Anmeldenummer: 12007388.7
(22) Anmeldetag: 26.10.2012
(51) Int. Cl.: B02C 13/14, B02C 23/24, C04B 20/02, C04B 30/02

(54) **Verfahren zur Herstellung einer Wärmedämm-Mischung**
Method for producing a thermal insulation mixture
Procédé de fabrication d'un mélange d'isolation thermique

(43) Veröffentlichungstag der Anmeldung: 30.04.2014
(73) Patentinhaber: Evonik Degussa GmbH, 45128 Essen (DE)
(72) Erfinder: Menzel, Frank, 63456 Hanau (DE); Banert, Tobias, 63450 Hanau (DE); Müller Hubert, 65929 Frankfurt am Main (DE); Geisler, Matthias, 63538 Großkrotzenburg (DE); Schultz, Thorsten, 64739 Hassenroth (DE)

(56) Entgegenhaltungen:
- EP-A1- 0 796 660
- EP-A2- 1 787 722
- DE-A1- 19 618 968
- DE-A1-102007 020 716
- GB-A- 1 230 947
- R. CAPS ET AL: "Thermal Conductivity of Opacified Powder Filler Materials for Vacuum Insulations1", INTERNATIONAL JOURNAL OF THERMOPHYSICS, Bd. 21, Nr. 2, 1. Januar 2000 (2000-01-01) , Seiten 445-452, XP055078905, ISSN: 0195-928X, DOI: 10.1023/A:1006691731253
- J. FRICKE ET AL: "Optimization of monolithic silica aerogel insulants", INTERNATIONAL JOURNAL OF HEAT AND MASS TRANSFER, Bd. 35, Nr. 9, 1. September 1992 (1992-09-01), Seiten 2305-2309, XP055078907, ISSN: 0017-9310, DOI: 10.1016/0017-9310(92)90073-2

## Beschreibung

Die Erfindung betrifft ein kontinuierliches Verfahren zur Herstellung einer Wärmedämm-Mischung, nach Anspruch 1.

Wärmedämm-Mischungen, die Kieselsäure, Trübungsmittel und Fasern enthalten sind bekannt. Zur Herstellung dieser werden beispielsweise wie EP-A-1988228 offenbart Planetenmischer oder wie in DE-A-102010029513 offenbart Dissolver, Planetendissolver, Zyklonmischer, Fluidmischer und Mahlsichter eingesetzt. Das Verfahren wird bevorzugt so ausgeführt, dass erst die Kieselsäure vordispergiert wird, dann die Gesamtmenge an Fasern zuerst mit einem Teil der Kieselsäure als eine Art Masterbatch vorgemischt wird. Alternativ kann der Masterbatch auch die Gesamtmenge IR-Trübungsmittel und Faser enthalten. Nach intensiver Dispergierung wird die vordispergierte Kieselsäure hinzugegeben und intensiv eingemischt.

Der Stand der Technik dokumentiert, dass bei der Herstellung von Wärmedämm-Mischungen aus Gründen der besseren Beherrschbarkeit das Vermahlen und Mischen der Einsatzstoffe getrennt, oft mittels anderer Aggregate, durchgeführt wird. Hierdurch sind typischerweise nur geringe Durchsätze realisierbar, bei hohem Handhabungsaufwand und hohem Anlageneinsatz. Dies wiederum führt zu hohen spezifischen Fertigungskosten, geringer Produktivität und hohem Investitionsbedarf. GB 1 230 947 offenbart ein Verfahren zur Herstellung einer Wärmedämm-Mischung gemäß dem Oberbegriff des Anspruchs 1.

Die technische Aufgabe der vorliegenden Erfindung bestand daher in der Bereitstellung eines Verfahrens zur Herstellung einer Wärmedämm-Mischung, bei dem die Vermahlung und die Vermischung der Einsatzstoffe kontinuierlich erfolgen und das einen hohen Durchsatz erlaubt.

Eine weitere technische Aufgabe bestand darin, verbesserte pulverförmige Mischungen zur Wärmedämmung bereitzustellen.

Gegenstand der Erfindung ist ein Verfahren zur kontinuierlichen Herstellung einer pulverigen Wärmedämm-Mischung, welche Kieselsäurepartikel, Trübungsmittelpartikel umfasst oder aus ihnen besteht, mit den Merkmalen des Anspruchs 1.

Als Feinprallmühle haben sich insbesondere Stiftmühlen und Luftwirbelmühlen bewährt. Die besten Ergebnisse hinsichtlich Durchsatz und Qualität der Wärmedämm-Mischung liefert eine Luftwirbelmühle. Die Wirkungsweise einer Luftwirbelmühle, bei der Partikel von einem Trägergasstrom erfasst, in Turbulenzen versetzt und durch Kollision der Partikel untereinander und Kollision mit den Bestandteilen der Mühle vermahlen werden, ist bekannt. Die Luftwirbelmühle umfasst mehrere Mahlstufen mit einem gemeinsamen Stator mit mehreren übereinander angeordneten Mahlbahnen als Rotor.

Eine Luftwirbelmühle umfasst einen sich mit hoher Geschwindigkeit drehenden Rotor, der fest auf einer Welle montiert ist. Durch die Drehung werden Wirbel erzeugt, die die zu vermahlenden und zu vermischenden Partikel aufnehmen. Eine anschließende Sichterzone trennt Feinprodukt von Grobprodukt, und das Grobprodukt wird kontinuierlich in die untere Mahlzone zurückgeführt. Die Luftwirbelmühle kann mit einem nachgeschalteten Filterzyklon, in dem wahlweise ein Sichtersystem integriert sein kann, ausgestattet sein, der die Luft von dem erzeugten Produkt trennt und das erhaltene Produkt beispielsweise über Zellradschleusen aus dem Filter austrägt.

Der Begriff "vorgemischter Strom" soll bedeuten, dass die partikulären Bestandteile des Stromes lediglich, möglichst homogen, vermischt und nicht oder nur in untergeordnetem Umfang vermahlen werden. Das resultierende Gemisch weist nicht die guten Wärmedämmeigenschaften des Materiales auf, welches gemäß der Erfindung hergestellt ist.

Bevorzugtes Trägergas ist Luft. Das Trägergas kann vorgeheizt sein, bevorzugt auf Temperaturen von 100°C bis 450°C, besonders bevorzugt 150°C bis 300°C. Eine solche Ausführungsform ist insbesondere dann vorteilhaft, wenn der Herstellung der pulverförmigen Mischung weitere Schritte, wie eine Hydrophobierung und/oder ein Verpressen zu Formkörpern vorgesehen ist. Diese nachgelagerten Schritte lassen sich am besten durchführen, wenn die pulverförmige Mischung nur eine geringe Restfeuchte, in der Regel von nicht mehr als 0,3 bis 0,5 Ma.-%, und eine Temperatur von 100°C oder mehr, in der Regel 120 bis 150°C, aufweist. Der technische Vorteil dieser Ausführungsform liegt darin, dass die zu mischenden Komponenten in einem maximalen Dispergierzustand vorliegen, wodurch die Trocknung innerhalb eines sehr kurzen Zeitraumes möglich ist.

In einer bevorzugten Ausführungsform der Erfindung wird der vorgemischte Strom erhalten, indem man kontinuierlich jeweils über einen Trägergasstrom über jeweils eine Dosiereinheit, die beispielsweise eine Dosierschnecke und eine Zellradschleuse umfasst, einen Kieselsäurepartikel enthaltenden Massestrom und einen Trübungsmittelpartikel enthaltenden Massestrom erzeugt und diese zusammenführt.

Bei dem Verfahren kann die Umfanggeschwindigkeit der Luftwirbelmühle bis zu 200 m/s betragen.Die geeignete Umfanggeschwindigkeit richtet sich nach dem beabsichtigten Durchsatz und dem Verhältnis der Mischungspartner Kieselsäurepartikel und Trübungsmittelpartikel. Generell gilt, dass hohe Umfanggeschwindigkeiten zu einem höheren Materialverschleiß der Mühle führen, während zu niedrige Umfanggeschwindigkeiten die Mischgüte verschlechtern. Bevorzugt ist ein Bereich der Umfanggeschwindigkeit von 30 bis 100 m/s und besonders bevorzugt ein Bereich von 50 bis 80 m/s.

Die mittlere Verweilzeit der Mischungspartner Kieselsäurepartikel und Trübungsmittelpartikel in der Luftwirbelmühle beträgt bevorzugt weniger als 10 s. Generell wird man sich an niedrigen Gasdurchsätzen orientieren, da eine höhere Gasmenge einen höheren technischen Aufwand bedingt. Bei zu niedrigen Gasdurchsätzen kann es zu Feststoffsedimentation in der Luftwirbelmühle damit zu einer instabilen Betriebsweise kommen. Wie im Falle der Umfanggeschwindigkeit wird auch die mittlere Verweilzeit sich nach dem beabsichtigten Durchsatz und dem Verhältnis der Mischungspartner Kieselsäurepartikel und Trübungsmittelpartikel richten. Besonders bevorzugt ist eine mittlere Verweilzeit von 0,05 bis 5 s und ganz besonders bevorzugt von 0,1 bis 1 s.

Die zur Feinprallmühle geführten partikulären Anteile aus Kieselsäure und Trübungsmittel können innerhalb weiter Grenzen variiert werden. Bevorzugt ist ein Anteil an Kieselsäurepartikein von 30 bis 95 Gew.-% und an Trübungsmittelpartikeln von 5 bis 70 Gew.-%, jeweils bezogen auf die Summe der partikulären Anteile. Besonders bevorzugt ist ein Anteil an Kieselsäurepartikeln von 70 bis 90 Gew. % und an Trübungsmitteln von 10 bis 30 Gew.-%.

Ebenso kann die Beladung des Trägergases über weite Grenzen variiert werden. Bevorzugt beträgt sie 0,2 bis 2 kg Feststoff/Nm³ Trägergas und besonders bevorzugt 0,5 bis 1,2 kg Feststoff/Nm³ Trägergas. Der Feststoff umfasst oder besteht aus Kieselsäurepartikeln und Trübungsmittelpartikeln.

Bei dem erfindungsgemäßen Verfahren werden Fasern in den partikelhaltigen Strom eingebracht. Erfindungsgemäß geschieht dies erst außerhalb der Mahlzone, oberhalb der letzten Mahlbahn, noch innerhalb einer Luftwirbelmühle. Hier wirken keine rotierenden Teile mit hohen Scherbelastungen mehr auf die Partikel und Fasern ein. Die Fasern werden dadurch besonders schonend vereinzelt und mit den Partikeln vermischt.

Bei dem erfindungsgemäßen Verfahren beträgt der Durchsatz an Kieselsäurepartikein, Trübungsmittelpartikeln und gegebenenfalls Fasern in Summe bevorzugt wenigstens 200 kg/h, besonders bevorzugt 200 bis 1500 kg/h und ganz besonders bevorzugt 400 bis 1000 kg/h.

Als Kieselsäurepartikel kommen Siliciumdioxid-Aerogele, Fällungskieselsäuren und pyrogen hergestellte Kieselsäuren in Frage. Die besten Ergebnisse werden mit pyrogen hergestellten Kieselsäuren erhalten.

Pyrogene Kieselsäuren werden durch Flammenhydrolyse von Siliciumverbindungen, wie beispielsweise Chlorsilanen, hergestellt. Bei diesem Verfahren wird ein hydrolysierbares Siliciumhalogenid mit einer Flamme zur Reaktion gebracht, die durch Verbrennung von Wasserstoff und eines sauerstoffhaltigen Gases gebildet worden ist. Die Verbrennungsflamme stellt dabei Wasser für die Hydrolyse des Siliciumhalogenides und genügend Wärme zur Hydrolysereaktion zur Verfügung. Eine so hergestellte Kieselsäure wird als pyrogene Kieselsäure bezeichnet. Bei diesem Prozess werden zunächst Primärpartikel gebildet, die nahezu frei von inneren Poren sind. Diese Primärteilchen verschmelzen während des Prozesses über sogenannte "Sinterhälse" zu Aggregaten. Aufgrund dieser Struktur ist pyrogen hergestellte Kieselsäure ein idealer Wärmedämmstoff, da die Aggregatstruktur eine hinreichende mechanische Stabilität bewirkt, die Wärmeübertragung durch Festkörperleitfähigkeit über die "Sinterhälse" minimiert und eine ausreichend hohe Porosität erzeugt.

Die Oberfläche der Kieselsäure kann durch Umsetzung mit Organosilanen modifiziert sein. Beispielhaft sind Rₙ-Si-X₄₋ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, mit n = 1-8; R = -H, -CH₃, -C₂H₅; X = -Cl, -Br; -OCH₃, -OC₂H₅, -OC₃H₈, Y= NH, O genannt. Explizit seien (CH₃)₃SiCl, (CH₃)₂SiCl₂, CH₃SiCl₃, (CH₃)₃SiOC₂H₅, (CH₃)₂Si(OC₂H₅)₂, CH₃Si(OC₂H₅)₃, (CH₃)₃SiNHSi(CH₃)₃, (CH₃)₃SiOSi(CH₃)₃, (CH₃)₈Si₄O₄ [Octamethyltetracyclosiloxan], (CH₃)₆Si₃O₃ [Hexamethyltricyclosiloxan] und (CH₃)₃Si(OSi(CH₃)₂)₄OH [niedrigmolekulares Polysiloxanol] genannt.

Bei dem erfindungsgemäßen Verfahren liefern jedoch nichtoberflächenmodifizierte Kieselsäurepartikel die besseren Ergebnisse. Insbesondere kommen pyrogene Kieselsäurepartikel mit einer BET-Oberfläche von 90 m²/g oder mehr, besonders bevorzugt von 150 bis 500 m²/g zum Einsatz.

Bei den im erfindungsgemäßen Verfahren eingesetzten Trübungsmittelpartikeln handelt es sich bevorzugt um Titanoxide, Zirkonoxide, Ilmenite, Eisentitanate, Eisenoxide, Zirkonsilikate, Siliciumcarbid, Manganoxide, Graphite und/oder Ruße, oder um Stoffgemische, welche mindestens einen der vorgenannten Bestandteile umfassen. Besonders bevorzugt handelt es sich um Siliciumcarbid, Titanoxide, Eisenoxide oder Ruße. Die Partikelgröße der Trübungsmittel liegt in der Regel zwischen 0,1 bis 25 µm. Bei Siliciumcarbid und Titanoxiden ist der mittlerer Partikeldurchmesser d₅₀ bevorzugt 1 bis 10 µm, besonders bevorzugt 2 bis 8 µm. Der Anteil an Trübungsmittelpartikeln an der Gesamtmischung beträgt bevorzugt 10 bis 30 Gew.-%. Zur mechanischen Verstärkung werden zusätzlich Fasern eingesetzt Diese Fasern können anorganischen oder organischen Ursprungs sein und betragen in der Regel 2 bis 10 Gew.-%, bezogen auf die Summe von Kieselsäuren und Trübungsmitteln. Beispiele einsetzbarer anorganischer Fasern sind Glaswolle, Steinwolle, Basalt-Fasern, Schlacken-Wolle und keramische Fasern, die aus Schmelzen von Aluminiumoxid und/oder Siliciumdioxid, sowie weiteren anorganischen Metalloxiden bestehen. Reine Siliciumdioxidfasern sind beispielsweise Silica-Fasern. Beispiele einsetzbarer organischer Fasern sind Cellulosefasern, Textilfasern oder Kunststofffasern. Der Durchmesser der Fasern beträgt bevorzugt 1 bis 30 µm, besonders bevorzugt 5 bis 15 µm, ganz besonders bevorzugt 6 bis 9 µm, und die Länge beträgt bevorzugt 1 bis 25 mm, besonders bevorzugt 3 bis 12 mm.

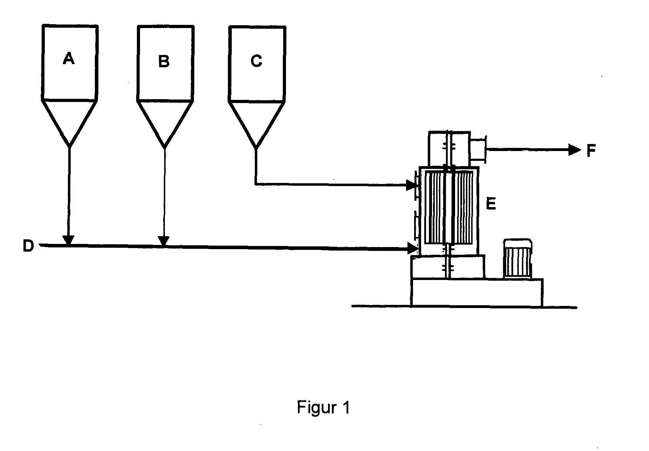

Figur 1 zeigt schematisch ein Fließbild zur Durchführung des erfindungsgemäßen Verfahrens. Dabei ist A = Kieselsäure, B = Trübungsmittel, C = Fasern, D = Luft, E = Feinprallmühle und F = Filter.

Weiterhin wird eine pulverförmige Mischung zur Wärmedämmung bereitgestellt die als Pulverbestandteile 70 bis 90 Gew.-% pyrogene Kieselsäure mit einer BET-Oberfläche von 150 bis 500 m²/g, bevorzugt 200 bis 400 m²/g, und 10 bis 30 Gew.-% Siliciumcarbid, jeweils bezogen auf die pulverförmige Mischung, enthält, bei der bei einer Temperatur von 300K der normierte, effektive, massenspezifische Gesamt-Extinktionskoeffizient, definiert als effektiver, massenspezifischer Gesamt-Extinktionskoeffizient dividiert durch Massenanteil Siliciumcarbid in der pulverförmigen Mischung, wenigstens 3,5 m²/kg, bevorzugt 3,5 bis 4,5 m²/kg, besonders bevorzugt 3,8 bis 4,3 m²/kg beträgt.

Dabei beträgt der mittlere Partikeldurchmesser d₅₀ des Siliciumcarbids bevorzugt 1 bis 8 µm.

Weiterhin wird eine pulverförmige Mischung zur Wärmedämmung bereitgestellt die als Pulverbestandteile 70 bis 90 Gew.-% pyrogene Kieselsäure mit einer BET-Oberfläche von 150 bis 500 m²/g, bevorzugt 200 bis 400 m²/g, und 10 bis 30 Gew.-% Ruß, bevorzugt Flammruß, jeweils bezogen auf die pulverförmige Mischung, enthält, bei der bei einer Temperatur von 300K (27°C) der normierte, effektive, massenspezifische Gesamt-Extinktionskoeffizient, definiert als effektiver, massenspezifischer Gesamt-Extinktionskoeffizient dividiert durch Massenanteil Ruß in der pulverförmigen Mischung, wenigstens wenigstens 9 m²/kg, bevorzugt 9 bis10 m²/kg, beträgt.

Sowohl die Siliciumcarbid als auch die Ruß enthaltende pulverförmige Mischung kann 2 bis 10 Gew.-% Fasern, bezogen auf die pulverförmige Mischung, enthalten. Bei den Fasern handelt es sich um solche, die bereits in der Anmeldung beschrieben sind.

Ein Zuführungsbeispiel der Erfindung ist die Verwendung der nach dem erfindungsgemäßen Verfahren erhältlichen pulverförmigen Mischung oder der pulverförmigen, Siliciumcarbid enthaltenden Mischung mit einem normierten, effektiven, massenspezifischen Gesamt-Extinktionskoeffizienten bei einer Temperatur von 300K (27°C) von wenigstens 3,5 m²/kg oder der pulverförmigen, Ruß enthaltenden Mischung mit einem normierten, effektiven, massenspezifischen Gesamt-Extinktionskoeffizienten von wenigstens 9 m²/kg oder der Pulver-Faser-Mischung zur Herstellung von Formkörpern, auch als Kernstrukturen in Vakuumisolationspaneelen, zur Wärmedämmung.

### Beispiele:

### Einsatzstoffe

A: AEROSIL® 300, Pyrogene Kieselsäure; Evonik Industries; BET-Oberfläche 300 m²/g
B: Flammruß 101, ORION Engineered Carbon; d₅₀ = 2,17 µm;
C: Siliciumcarbid, Silcar G14; ESK; d₅₀ = 2,73 µm;
D: Glasfasern, mittlerer Faserdurchmesser ca. 9 µm; Länge ca. 6 mm

Der mittlere Partikeldurchmesser d₅₀ wird mittels Laserbeugung unter Verwendung eines HORIBA LA-950 Messgerätes bestimmt.

Luftwirbelmühle: Modell LGM4 von HOSOKAWA ALPINE.

Beispiel 1: AEROSIL^{®} 300 und Flammruß 101 werden jeweils mit Luft in die Luftwirbelmühle gesaugt. Aufgegeben werden die Einsatzstoffe jeweils volumetrisch über eine Dosierschnecke. Als Luftabschluss zwischen Dosierschnecke und Anlage wird jeweils eine Zellenradschleuse eingesetzt. Die Einsatzstoffe werden so dosiert, dass ein Gemisch aus 80 Gew.-% Kieselsäure und 20 Gew.-% Siliciumcarbid, jeweils bezogen auf 25 kg Ansatzgröße, resultiert. Die Umfanggeschwindigkeit der Luftwirbelmühle beträgt ca. 80 ms⁻¹, die mittlere Verweilzeit des Stoffgemisches ca. 0,1 s. Der Durchsatz ergibt sich zu 394,7 kg/h. Die in die Luftwirbelmühle eingebrachte Luftmenge beträgt 350 m³/h.

Die Beispiele 2 bis 7 werden analog durchgeführt. Einsatzstoffe und Betriebsparameter sind der Tabelle 1 zu entnehmen.

Die Beispiele 8 bis 10 werden analog Beispiel 1 ausgeführt, jedoch werden im oberen Bereich der Luftwirbelmühle zusätzlich Glasfasern über eine Aufgabestation eingesaugt. Einsatzstoffe und Betriebsparameter sind der Tabelle 1 zu entnehmen.

Beispiel 11 (Vergleich): 3 kg des aus Versuch 6 erhaltenen Gemisches werden mit 150 g Glasfasern im Konusmischer ca. 30 Minuten lang gemischt. Es zeigte sich, dass die Fasern im Mischer deutlich geschädigt sind.

Beispiel 12 (Vergleich): In einen Pflugscharmischer der Fa. Minox, Typ FSM 300 HM/1MK werden 4 kg AEROSIL^{®} 300 und 1 kg Flammruß 101 bei voller Schaufel-Umlauffrequenz jeweils 3 min ohne Messerkopf und dann 3 min mit Messerkopf mit voller Drehzahl gemischt.

Beispiel 13 (Vergleich): In einen Pflugscharmischer der Fa. Minox, Typ FSM 300 HM/1MK werden 4 kg AEROSIL^{®} 300 und 1 kg Siliciumcarbid bei voller Schaufel-Umlauffrequenz jeweils 3 min ohne Messerkopf und dann 3 min mit Messerkopf mit voller Drehzahl gemischt.

Bestimmung des normierten, effektiven, massenspezifischen Gesamt-Extinktionskoeffizienten eₘ* - Beispiele 1, 5, 12 und 13

Die Bestimmung des effektiven, massenspezifischen Extinktionskoeffizienten eₘ* erfolgte nach dem bei Keller et al., High temperatures-high pressures, Seiten 297-314, 2010 beschriebenen Messverfahren. Die robenpräparation ist hierin unter den Punkten 3.1., 3.2. und 3.2.2 beschrieben. Die Berechnung von eₘ* ist unter Punkt 2.2. genannt. Dabei entspricht eₘ* dem Kehrwert des in Gleichung 18 angebenen e* (T).

Bei der Methode nach Keller et al. wird das Material und das Vergleichsmaterial mittels eines Fourier-Transformations-Infrarot (FTIR) Spektrometers der Firma Bruker im Wellenlängenbereich von 1,4 µm bis 35 µm untersucht. Die Präparation der Proben erfolgte mit dem Vacuum Dispersing System GALAI PD-10 der Fa. Galai Instruments. Die anschliessende Normierung des effektiven, massenspezifischen Gesamt-Extinktionskoeffzienten geschieht durch die Division durch den Massenanteil des IR-Trübungsmittels in der pulverförmigen Mischung. Dieser normierte, effektive, massenspezifische Gesamt-Extinktionskoeffizient bei einer Temperatur von 300K (27°C) ist in Tabelle 2 für ausgewählte Beispiele dargestellt.

**Tabelle 2: Normierter, effektiver, massenspezifischer Gesamt-Extinktionskoeffizient eₘ* bei 300K (27 °C).**

| Beispiel | 1 | 5 | 12 | 13 |
|---|---|---|---|---|
| eₘ* [m²/kg] | 9,5 | 3,7 | 8,7 | 3,4 |

Die höheren Werte für eₘ* stehen für eine geringere Strahlungswärmeleitfähigkeit der Materialien der Beispiele 1 und 5 gegenüber denen aus dem Stand der Technik gemäß der Beispiele 12 und 13. Besonders in evakuierten Systemen stellt die Strahlungswärmeleitfähigkeit einen bedeutenden Anteil der Gesamtwärmeleitfähigkeit dar.

**Tabelle 1: Einsatzstoffmengen und Betriebsparameter**

| **Beispiel** | **A** | **B** | **C** | **D** | **Summe A - D** | **Luft** | **Umfanggeschwindigkeit** | **Durchsatz** | **Feststoff/ Trägergas** |
|---|---|---|---|---|---|---|---|---|---|
| | Gew.-% | Gew.-% | Gew.-% | Gew.-% | kg | m³/h | m/s | kg/h | kg/Nm³ |
| **1** | 80 | 20 | - | - | 25,0 | 350 | 80 | 394,7 | 1,1 |
| **2** | 80 | 20 | - | - | 75,0 | 500 | 80 | 394,7 | 0,8 |
| **3** | 70 | 30 | - | - | 27,0 | 500 | 80 | 426,3 | 0,9 |
| **4** | 60 | 40 | - | - | 31,8 | 500 | 80 | 502,1 | 1,0 |
| **5** | 80 | - | 20 | - | 22,0 | 500 | 80 | 227,6 | 0,5 |
| **6** | 80 | - | 20 | - | 25,0 | 500 | 80 | 394,7 | 0,8 |
| **7** | 70 | - | 30 | - | 27,0 | 500 | 80 | 426,3 | 0,9 |
| **8** | 80 | 20 | - | 5 | 27,0 | 650 | 80 | 405,0 | 0,6 |
| **9** | 80 | - | 20 | 5 | 24,4 | 700 | 80 | 385,3 | 0,6 |
| **10** | 70 | - | 30 | 5 | 28,0 | 650 | 56 | 442,1 | 0,7 |

| | | | | | | | | | |
|---|---|---|---|---|---|---|---|---|---|
| ** bei 20°C | | | | | | | | | |

## Patentansprüche

1. Verfahren zur kontinuierlichen Herstellung einer Wärmedämm-Mischung umfassend Kieselsäurepartikel und Trübungsmittelpartikel,
**dadurch gekennzeichnet dass**,
man einen vorgemischten Strom umfassend ein Trägergas, Kieselsäurepartikel und Trübungsmittelpartikel in eine Feinprallmühle einbringt, dort vermahlt und mischt und nachfolgend den Feststoff vom Gasstrom abtrennt, und wobei die Feinprallmühle eine Luftwirbelmühle ist, die an einer rotierbaren Achse übereinander angeordnete Mahlbahnen umfasst und
wobei man Fasern oberhalb der letzten Mahlbahn, noch innerhalb einer Luftwirbelmühle in den partikelhaltigen Strom einbringt.

2. Verfahren nach Anspruch 1, **dadurch gekennzeichnet, dass** die Umfanggeschwindigkeit der Luftwirbelmühle bis zu 200 ms⁻¹ beträgt.

3. Verfahren nach den Ansprüchen 1 oder 2, **dadurch gekennzeichnet, dass** die mittlere Verweilzeit der Kieselsäurepartikel und Trübungsmittelpartikel in der Luftwirbelmühle weniger als 10 s beträgt.

4. Verfahren nach den Ansprüchen 1 bis 3, **dadurch gekennzeichnet, dass** das Trägergas auf 100°C bis 450°C vorgeheizt ist.

5. Verfahren nach den Ansprüchen 1 bis 4, **dadurch gekennzeichnet, dass** der vorgemischte Strom erhalten wird, indem man jeweils in einen Trägergasstrom über jeweils eine Dosiereinheit Kieselsäurepartikel und Trübungsmittelpartikel zusammenführt.

6. Verfahren nach Anspruch 1 bis 5, **dadurch gekennzeichnet, dass** die zur Feinprallmühle geführten partikulären Anteile des Gemisches 30 bis 95 Gew.-% Kieselsäurepartikel und 5 bis 70 Gew.-% partikuläres Trübungsmittel, bezogen auf die Summe der partikulären Anteile, enthalten.

7. Verfahren nach den Ansprüchen 1 bis 6, **dadurch gekennzeichnet, dass** die Beladung des Trägergases 0,2 bis 2 kg Feststoffe/Nm³ Trägergas beträgt.

8. Verfahren nach den Ansprüchen 1 bis 7, **dadurch gekennzeichnet, dass** der Durchsatz an Kieselsäurepartikeln, Trübungsmittelpartikeln und gegebenenfalls Fasern in Summe wenigstens 200 kg/h beträgt.

9. Verfahren nach den Ansprüchen 1 bis 8, **dadurch gekennzeichnet, dass** pyrogen hergestellte Kieselsäurepartikel eingesetzt werden.

10. Verfahren nach den Ansprüchen 1 bis 9, **dadurch gekennzeichnet, dass** man die Trübungsmittelpartikel aus der Gruppe bestehend aus Rußen, Titanoxiden, Siliciumcarbiden, Zirkonoxiden, Ilmeniten, Eisentitanaten, Eisenoxiden, Zirkonsilikaten, und Manganoxiden auswählt.

11. Verfahren nach den Ansprüchen 1 bis 10, **dadurch gekennzeichnet, dass** man die Fasern aus der Gruppe bestehend aus Glaswolle, Steinwolle, keramischen Fasern, Siliciumdioxidfasern, Cellulosefasern, Textilfasern und Kunststofffasern auswählt.

## Claims

1. Method for continuous production of a thermally insulating mixture comprising silica particles and opacifier particles, **characterized in that** a premixed stream comprising a carrier gas, silica particles and opacifier particles is introduced into a fine impact mill, ground and mixed therein, after which the solid is separated from the gas stream, and wherein the fine impact mill is an air-stream mill comprising grinding tracks arranged one above the other on a rotatable shaft and wherein fibers are introduced into the particle-containing stream above the final grinding track, but still inside an air-stream mill.

2. Method according to Claim 1, **characterized in that** the peripheral speed of the air-stream mill amounts to up to 200 ms⁻¹.

3. Method according to Claims 1 or 2, **characterized in that** the mean residence time of the silica particles and opacifier particles in the air-stream mill amounts to less than 10 s.

4. Method according to Claims 1 to 3, **characterized in that** the carrier gas is preheated to 100°C to 450°C.

5. Method according to Claims 1 to 4, **characterized in that** the premixed stream is obtained by bringing together silica particles and opacifier particles in each case into a carrier gas stream in each case via a metering unit.

6. Method according to Claims 1 to 5, **characterized in that** the particulate fractions of the mixture conveyed to the fine impact mill contain 30 to 95 wt.% silica particles and 5 to 70 wt.% particulate opacifier, relative to the total of the particulate fractions.

7. Method according to Claims 1 to 6, **characterized in that** the loading of the carrier gas amounts to 0.2 to 2 kg solids/Nm³ carrier gas.

8. Method according to Claims 1 to 7, **characterized in that** the throughput of silica particles, opacifier particles and optionally fibers amounts in total to at least 200 kg/h.

9. Method according to Claims 1 to 8, **characterized in that** pyrogenically produced silica particles are used.

10. Method according to Claims 1 to 9, **characterized in that** the opacifier particles are selected from the group consisting of carbon blacks, titanium oxides, silicon carbides, zirconium oxides, ilmenites, iron titanates, iron oxides, zirconium silicates, and manganese oxides.

11. Method according to Claims 1 to 10, **characterized in that** the fibers are selected from the group consisting of glass wool, rock wool, ceramic fibers, silicon dioxide fibers, cellulose fibers, textile fibers and plastics fibers.

## Revendications

1. Procédé de fabrication continue d'un mélange d'isolation thermique comprenant des particules de silice et des particules d'agent opacifiant, **caractérisé en ce qu'**un courant pré-mélangé comprenant un gaz vecteur, des particules de silice et des particules d'agent opacifiant est introduit dans un broyeur à percussion fin, y est broyé et mélangé, puis le solide est séparé du courant gazeux,
le broyeur à percussion fin étant un broyeur à tourbillon d'air qui comprend des pistes de broyage agencées les unes sur les autres sur un axe rotatif, et des fibres étant introduites dans le courant contant des particules au-dessus de la dernière piste de broyage, encore à l'intérieur d'un broyeur à tourbillon d'air.

2. Procédé selon la revendication 1, **caractérisé en ce que** la vitesse périphérique du broyeur à tourbillon d'air est de jusqu'à 200 ms⁻¹.

3. Procédé selon les revendications 1 ou 2, **caractérisé en ce que** le temps de séjour moyen des particules de silice et des particules d'agent opacifiant dans le broyeur à tourbillon d'air est de moins de 10 s.

4. Procédé selon les revendications 1 à 3, **caractérisé en ce que** le gaz vecteur est préchauffé à une température de 100 °C à 450 °C.

5. Procédé selon les revendications 1 à 4, **caractérisé en ce que** le courant pré-mélangé est obtenu par réunion de particules de silice et de particules d'agent opacifiant, chacune dans un courant de gaz vecteur et chacune par une unité de dosage.

6. Procédé selon les revendications 1 à 5, **caractérisé en ce que** les fractions particulaires du mélange introduites dans le broyeur à percussion fin contiennent 30 à 95 % en poids de particules de silice et 5 à 70 % en poids d'agent opacifiant particulaire, par rapport à la somme des fractions particulaires.

7. Procédé selon les revendications 1 à 6, **caractérisé en ce que** le chargement du gaz vecteur est de 0,2 à 2 kg de solides/Nm³ de gaz vecteur.

8. Procédé selon les revendications 1 à 7, **caractérisé en ce que** le débit de particules de silice, de particules d'agent opacifiant et éventuellement de fibres est au total d'au moins 200 kg/h.

9. Procédé selon les revendications 1 à 8, **caractérisé en ce que** des particules de silice fabriquées par voie pyrogène sont utilisées.

10. Procédé selon les revendications 1 à 9, **caractérisé en ce que** les particules d'agent opacifiant sont choisies dans le groupe constitué par les noirs de carbone, les oxydes de titane, les carbures de silicium, les oxydes de zirconium, les ilménites, les titanates de fer, les oxydes de fer, les silicates de zirconium et les oxydes de manganèse.

11. Procédé selon les revendications 1 à 10, **caractérisé en ce que** les fibres sont choisies dans le groupe constitué par la laine de verre, la laine de roche, les fibres céramiques, les fibres de dioxyde de silicium, les fibres de cellulose, les fibres textiles et les fibres plastiques.
